(19) **Europäisches Patentamt**
**European Patent Office**
**Office européen des brevets**

(11) **EP 2 014 613 B1**

(12) **FASCICULE DE BREVET EUROPEEN**

(45) Date de publication et mention
de la délivrance du brevet:
**08.03.2017 Bulletin 2017/10**

(51) Int Cl.:
*C01B 3/06* *(2006.01)*      *B01J 7/02* *(2006.01)*
*C01B 7/04* *(2006.01)*      *C01B 7/01* *(2006.01)*
*C01B 13/02* *(2006.01)*     *C10H 21/00* *(2006.01)*

(21) Numéro de dépôt: **08159861.7**

(22) Date de dépôt: **07.07.2008**

(54) **DISPOSITIF GENERATEUR DE GAZ PORTABLE ET ALIMENTATION ELECTRIQUE À PILE COMBUSTIBLE COMPORTANT UN TEL DISPOSITIF**

TRAGBARE VORRICHTUNG ZUR GASERZEUGUNG UND STROMVERSORGUNG ÜBER EINE BRENNSTOFFZELLE, DIE EINE SOLCHE VORRICHTUNG UMFASST

PORTABLE GAS GENERATOR DEVICE AND POWER SUPPLY WITH FUEL-CELL COMPRISING SUCH A DEVICE

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **13.07.2007 FR 0756495**

(43) Date de publication de la demande:
**14.01.2009 Bulletin 2009/03**

(73) Titulaire: **Commissariat à l'Énergie Atomique et aux Énergies Alternatives
75015 Paris (FR)**

(72) Inventeurs:
• **Damery, Emmanuel**
**38920 Crolles (FR)**
• **Delmas, Jérôme**
**38000 Grenoble (FR)**
• **Laurent, Jean-Yves**
**38420 Domene (FR)**
• **Valon, Bruno**
**38100 Grenoble (FR)**

(74) Mandataire: **Ilgart, Jean-Christophe
BREVALEX
95, rue d'Amsterdam
75378 Paris Cedex 8 (FR)**

(56) Documents cités:
EP-A- 1 396 471      WO-A-2005/049485
WO-A-2006/091954     GB-A- 2 165 532
US-A- 4 155 712      US-A1- 2006 191 199
US-A1- 2007 020 172  US-B1- 6 746 496

## Description

## DOMAINE TECHNIQUE ET ART ANTÉRIEUR

La présente invention se rapporte à un dispositif générateur portable de gaz, et plus particulièrement à un générateur portable d'hydrogène, notamment pour pile à combustible, une pile à combustible comportant un tel dispositif générateur de gaz, en particulier d'hydrogène et à des éléments portables alimentés électriquement comportant une telle pile à combustible.

La recherche de source d'énergie propre est de plus en plus importante, notamment du fait de la diminution des ressources pétrolifères et également de l'impact de l'utilisation de combustible fossile sur l'environnement. Des piles à combustibles, notamment les piles à hydrogène permettent de produire de l'électricité avec un impact minime sur l'environnement. Ces piles utilisent l'hydrogène comme matière première pour produire de l'électricité par réaction électrochimique.

L'hydrogène peut être fourni soit à partir d'une réserve d'hydrogène sous forme de gaz sous pression, soit sous forme liquide, mais ce stockage nécessite des réservoirs de grande capacité. Par ailleurs, ceux-ci doivent être particulièrement sûrs car l'hydrogène est très inflammable. Par conséquent ce type de stockage n'est pas utilisable dans le cas de dispositifs portables, notamment de taille réduite.

On peut également utiliser des composés métalliques contenant de l'hydrogène qui est libéré par action énergétique. Le type de réaction réversible permettant le stockage de l'hydrogène est le suivant :

$$M + \frac{x}{2} H_2 \Leftrightarrow MH_x + chaleur$$

Pour libérer de l'hydrogène un apport d'énergie extérieure est donc nécessaire, sous forme de chaleur. Cependant le rendement global de production d'énergie est assez faible.

Une autre alternative est de produire de l'hydrogène au fur et à mesure que l'on en a besoin par mélange de réactifs, l'un des réactifs étant un hydrure.

Ce type d'alimentation en hydrogène apparaît donc particulièrement adapté pour réaliser l'alimentation de micro-piles à combustible dans des équipements portables.

Une solution particulièrement intéressante pour produire de l'hydrogène à la demande est de faire réagir de l'eau, plus généralement une solution aqueuse sur un hydrure en présence de catalyseur, par exemple du NaBH4 ou du Mg(BH4)2 selon les réactions suivantes :

$$NaBH_4 + 2\ H_2O \rightarrow NaBO_2 + 4\ H_2$$

ou

$$Mg(BH_4)_2 + 4\ H_2O \rightarrow Mg(Bo)_2 + 8\ H_2$$

Cependant cette méthode de génération d'hydrogène met en oeuvre une réaction hétérogène entre liquide et solide, par conséquent la cinétique de cette réaction est inférieure à celle d'une réaction entre deux composés dans un même état. En outre, dans le cas de réacteur de taille réduite, il n'est pas envisageable de prévoir des moyens d'agitation du liquide afin d'améliorer la cinétique de réaction.

Le document WO 2004/018352 décrit un système pour produire de l'hydrogène par contact entre une solution aqueuse de sel hybride métallique avec un catalyseur générateur d'hydrogène, ce système prévoit d'amener dans une chambre de réaction le sel hybride métallique et le catalyseur, l'alimentation en catalyseur étant réalisée au moyen d'une pompe. Ce système est donc relativement encombrant, il requiert l'apport d'énergie électrique extérieure.

Le document US 2006/0191199 décrit un générateur d'hydrogène comportant un réservoir d'eau et une chambre contenant un réactif solide, par exemple du borohydrure de sodium (NaBH4). Une vanne est prévue entre le réservoir d'eau et la chambre comportant le réactif solide afin de réguler l'alimentation en eau de la chambre contenant le réactif solide. Cette régulation étant obtenue en utilisant la pression de gaz d'hydrogène produite dans la chambre contenant le réactif solide.

Ce dispositif de génération d'hydrogène est relativement compact, cependant il ne permet pas d'optimiser la cinétique de réaction entre l'eau et le borohydrure de sodium, puisque la cinétique de réaction est ralentie par la présence de l'hydrogène produit dans la chambre de réaction.

C'est par conséquent un but de la présente invention d'offrir un dispositif de génération d'hydrogène compact et efficace, permettant une production à la demande de l'hydrogène, et plus généralement de gaz dans toutes les positions du générateur, et dont le déclenchement et l'arrêt sont commandés de manière simplifiée.

Un but de la présente invention est également d'offrir un dispositif d'alimentation en énergie électrique de matériel portable, offrant une grande compacité et une grande efficacité dans l'alimentation électrique.

## EXPOSÉ DE L'INVENTION

Les buts précédemment énoncés sont obtenus au moyen d'un générateur de gaz comportant un réservoir de solution aqueuse et une chambre de réaction, la chambre de réaction contenant un composé solide apte à provoquer la libération d'un gaz lors de sa mise en contact avec la solution aqueuse, et des moyens d'injection de la solution aqueuse dans l'élément solide en une zone déterminée, les moyens d'injection étant tels que cette zone déterminée d'injection peut être modifiée, afin d'éviter la limitation de la poursuite de la réaction par des produits de réaction, notamment le gaz généré.

En d'autres termes, on prévoit dans l'invention de modifier l'endroit où est injectée la solution aqueuse dans le solide à chaque injection, de manière discrète ou de manière continue afin d'éviter « un encrassement ou un engorgement de la zone de réaction ».

Dans un premier mode de réalisation, la commande du dispositif générateur d'hydrogène est manuelle, par exemple au moyen d'une molette disposée à l'extérieur d'un boitier du dispositif générateur d'hydrogène contenant le réservoir et la chambre de réaction Dans une variante de réalisation, l'injection est commandée par un moteur électrique.

Le réactif solide peut être par exemple un borohydrure métallique ou un mélange de plusieurs réactifs auxquels peut être ajouté un catalyseur ou un activateur de réaction. La solution aqueuse peut également contenir de manière avantageuse un activateur de réaction solubilisé dans la solution aqueuse.

La chambre de réaction peut contenir un catalyseur et le réservoir contient une solution aqueuse contenant un hydrure.

L'invention prévoit donc de déplacer le front de réaction entre le composé solide et le composé liquide afin d'éviter l'arrêt de la réaction par colmatage des réactifs.

Par exemple, le liquide, en particulier la solution aqueuse est injectée sur le composant solide au moyen d'un tube dont l'extrémité se déplace par rapport au composant solide au fur et à mesure que l'on introduit le réactif liquide dans la chambre de réaction. Par conséquent le liquide réagit toujours sur une zone renouvelée du composant solide.

Le dispositif présente également l'avantage de mettre en oeuvre des produits stables séparés avant réaction, alors qu'une solution même stabilisée se décompose sur le long terme. Par conséquent le générateur peut être conservé pendant une longue période et fonctionner au moment souhaité.

On peut utiliser des produits de réaction pâteux ou solides, sans risque de gêner la circulation fluidique. Par ailleurs on conserve un dispositif de volume constant puisque le produits de réaction, notamment l'hydrogène prend la place du liquide.

L'injection de la solution aqueuse sur le solide s'effectue sans pompe auxiliaire, par conséquent ce dispositif fonctionne sans l'apport d'énergie électrique.

La présente invention a par conséquent principalement pour objet un dispositif générateur de gaz par mise en contact d'un réactif liquide et d'un élément solide, comportant un réservoir de réactif liquide et une chambre de réaction destinée à contenir l'élément solide, le réservoir et la chambre de réaction étant séparés de manière étanche par une paroi mobile, une sortie de collecte du gaz généré dans la chambre de réaction et des moyens d'injection du réactif liquide sur l'élément solide, lesdits moyens d'injection traversant la paroi mobile et étant aptes à se déplacer dans l'élément solide.

Les moyens d'injection sont solidaires en mouvement de la paroi mobile, ainsi le déplacement des moyens d'injection s'effectue simultanément à la réduction du volume du réservoir.

Les moyens d'injection comportent au moins un tube traversant la paroi mobile et reliant le réservoir et la chambre de réaction.

Dans un exemple de réalisation, la paroi mobile est un piston, un déplacement du piston dans un sens de réduction du volume du réservoir provoquant un écoulement du réactif liquide du réservoir vers la chambre de réaction.

Dans un autre exemple de réalisation, le réservoir est délimité par une vessie souple apte à se déformer pour provoquer l'écoulement du réactif liquide du réservoir vers la chambre de réaction, ce qui permet de faciliter la réalisation de l'étanchéité du réservoir.

La paroi mobile est reliée à un mécanisme à vis sans fin. Ce mécanisme peut comporter un arbre muni d'un filetage coopérant avec un taraudage pratiqué dans une paroi intérieure du tube d'injection, l'arbre étant apte être mis en rotation, le réactif liquide pouvant s'écouler entre le tube et l'arbre.

Une molette à une extrémité de l'arbre apte à être tournée manuellement ou à l'aide d'un moteur électrique en prise avec une extrémité de l'arbre peut être prévue pour déplacer la paroi mobile.

De manière avantageuse, l'élément solide est apte à être traversé par un gaz, pour faciliter la collecte de celui-ci. Il peut être associé à un composant poreux qui améliore le passage du $H_2$, et donc son évacuation, par exemple de l'alumine ou du graphite. L'élément solide peut être associé à un composant poreux et inerte vis-à-vis de la réaction.

Dans un dispositif générateur d'hydrogène, l'élément solide est un hydrure et le réactif liquide est une solution aqueuse. à solution aqueuse peut avantageusement comporter un catalyseur formé par du platine, du nickel, du Ru, du $CoCl_2$, de l'acide malique, ou de l'acide chlorhydrique.

L'élément solide peut également être du $CaC_2$ et le réactif liquide une solution aqueuse, permettant de générer de l'acétylène, ou l'élément solide peut être du $Cl_3CCH (OH) NHCOOC_2H_5$ et le réactif liquide une solution aqueuse, permettant de générer du chlore, ou l'élément solide peut être de l'oxyde de manganèse et le réactif liquide de l'acide chlorhydrique, permettant de générer du chlore, ou l'élément solide peut être du peroxyde de sodium et le réactif liquide est une solution aqueuse, permettant de générer de l'oxygène.

Le réactif liquide et/ou l'élément solide comporte avantageusement un catalyseur de la réaction entre le réactif liquide et l'élément solide.

Le réactif liquide peut comporter un catalyseur formé par du platine, du nickel, du Ru, du $CoCl_2$, de l'acide malique, ou de l'acide chlorhydrique.

Dans un autre mode de réalisation, l'élément solide est un catalyseur de génération d'une gaz lorsque le réactif liquide est en contact avec celui-ci.

Le réactif liquide peut être une solution aqueuse contenant un hydrure et un stabilisant, par exemple de la soude, et le catalyseur est du type platine, ruthénium, cobalt ou un alliage de cobalt et de bore.

L'élément solide comporte avantageusement un substrat, avantageusement poreux, sur lequel est déposé le catalyseur.

La présente invention a également pour objet une alimentation électrique comportant une pile à combustible et au moins un dispositif générateur de d'hydrogène selon l'invention, ledit au moins dispositif générateur d'hydrogène étant relié de manière pneumatique au niveau de sa sortie de collecte à la pile pour l'alimenter en hydrogène gazeux.

La présente invention a également pour objet un élément portable électrique comportant une alimentation électrique selon la présente invention.

## BRÈVE DESCRIPTION DES DESSINS

La présente invention sera mieux comprise à l'aide de la description qui va suivre et des dessins en annexe, sur lesquels :

- la figure 1 est une vue en coupe longitudinale schématique d'un premier mode de réalisation d'un dispositif générateur d'hydrogène selon la présente invention à activation manuelle,
- la figure 2 est une vue en perspective arrachée d'une réalisation pratique du dispositif de la figure 1,
- la figure 3 est une vue en coupe longitudinale schématique d'une variante de réalisation d'un dispositif de la figure 1, dans lequel l'activation est réalisée par un moteur électrique,
- la figure 4 est une vue en coupe longitudinale schématique d'un deuxième mode de réalisation d'un dispositif de génération d'hydrogène selon la présente invention à activation automatique,
- la figure 5 est une représentation schématique d'un appareil portable selon la présente invention alimenté électriquement par une pile à combustible alimentée en hydrogène par un dispositif générateur d'hydrogène selon l'invention,
- la figure 6A est un vue en coupe longitudinale d'une réalisation industrielle du dispositif de la figure 4,
- la figure 6B est une vue agrandie en perspective de la figure 6A.

## EXPOSÉ DÉTAILLÉ DE MODES DE RÉALISATION PARTICULIERS

Dans la description qui va suivre, le dispositif générateur selon la présente invention va être décrit comme un générateur d'hydrogène pour pile à combustible, mais la présente invention est adaptée à la génération d'autres gaz par mise en contact d'un réactif solide et d'un réactif liquide, utilisé par d'autres dispositifs qu'une pile à combustible.

Par ailleurs, à des fins de simplification on parlera du gaz hydrogène mais il s'agit en fait de dihydrogène H2.

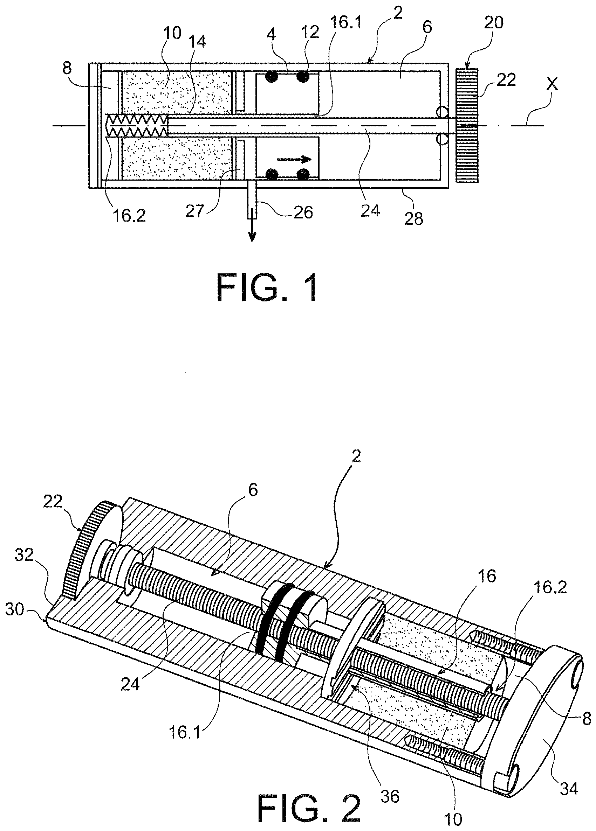

Sur la figure 1, on peut voir un premier mode de réalisation d'un dispositif générateur d'hydrogène selon la présente invention comportant une enveloppe 2, délimitant un volume intérieur V d'axe longitudinal X, dans lequel est monté à coulissement étanche un piston 4 selon l'axe X. Le piston 4 sépare le volume V en un réservoir 6 destiné à contenir une solution aqueuse et une chambre de réaction 8 destinée à contenir un réactif solide 10.

Le piston 4 coulisse de manière étanche dans le boitier 2, par exemple au moyen de joints toriques 12 montés sur sa périphérie extérieure et frottant sur une paroi intérieure du boîtier 2.

Le dispositif générateur d'hydrogène selon le premier mode de réalisation, comporte également des moyens d'injection 14 de la solution aqueuse ou réactif liquide dans la chambre de réaction 8 à partir du réservoir 6.

Dans l'exemple décrit, les moyens d'injection 14 sont solidaires en déplacement du piston 4.

Les moyens d'injection 14 comportent un tube d'injection 16 traversant le piston 14 et d'axe X et reliant de manière fluidique le réservoir 6 et la chambre de réaction 8.

Par exemple le tube 16 est monté dans un passage 18 axial pratiqué dans le piston 4, ce montage est réalisé de manière étanche afin d'éviter des fuites de liquide entre le piston 4 et le tube 16.

Le tube 16 comporte alors une première extrémité axiale 16.1 débouchant dans le réservoir 6 et une deuxième extrémité axiale 16.2 opposée à la première extrémité axiale 16.1 et débouchant dans la chambre de réaction 8.

L'extrémité d'injection 16.2 se déplace donc axialement dans le réactif solide lorsque le piston 4 se déplace.

Le dispositif générateur d'hydrogène selon le premier mode de réalisation comporte également des moyens de déplacement du piston 4 axialement, ces moyens de déplacement 20 sont actionnés manuellement.

Selon la présente invention, ces moyens 20 comportent une molette 22 à l'extérieur du boitier 2, cette molette est solidarisée en rotation avec un arbre 24, cet arbre 24 d'axe X pénètre dans le tube d'injection 16, l'arbre 24 comporte un filetage extérieur coopérant avec un taraudage intérieur pratiqué sur une paroi intérieure du tube d'injection 16, formant ainsi une vis sans fin. Ainsi une rotation de la molette 22 provoque une mise en rotation de l'arbre 24 et un coulissement selon l'axe X du tube d'injection 16 et donc du piston 4 solidaire de ce tube d'injection. Suivant le sens de rotation appliqué à la molette 22, le piston 4 se déplace vers l'une ou l'autre des extrémités longitudinales du boitier 2 du générateur selon la présente invention.

Selon la présente invention, le filetage de l'arbre 24 et le taraudage du tube d'injection 16 sont réalisés de telle sorte qu'ils permettent l'écoulement du réactif liquide contenu dans le réservoir 6 entre l'arbre 24 et la paroi intérieure du tube d'injection 16 dans la chambre de réaction 8. On pourrait prévoir pour faciliter l'écoulement du gaz de réaliser des rainures axiales dans le filetage et/ou le taraudage s'étendant sur toute la longueur de l'arbre et/ou du tube respectivement.

Il est également prévu des moyens d'évacuation de l'hydrogène sous forme gazeuse généré par contact entre le réactif liquide et le réactif solide dans la chambre de réaction, ces moyens 26 sont formés dans l'exemple par un tube de collecte réalisé sur une paroi latérale 28 du boitier 2 au niveau d'un espace libre entre le piston 4 et d'une paroi transversale 27 du côté du réactif solide.

La paroi 27 est solidaire du boitier 4 et est montée perpendiculairement à l'axe X ; elle comporte un passage central traversé par le tube d'injection 16.

La paroi 27 n'est pas montée de manière étanche dans le boîtier 4 afin de permettre l'écoulement de l'hydrogène sous forme gazeuse en direction du tube de collecte 26.

Pour permettre l'évacuation de l'hydrogène sous forme gazeuse, en particulier l'écoulement du gaz entre la zone de réaction entre le réactif liquide et le réactif solide et le tube de collecte 26, le réactif solide est prévu de telle sorte qu'il soit poreux au gaz afin de permettre le passage de celui-ci.

Le réactif poreux offre une porosité permettant le passage du gaz généré. Celui-ci peut être sous forme de poudre compactée ou non. On peut prévoir d'associer ce réactif à des billes en matériau neutre pour faciliter l'écoulement gazeux.

Nous allons maintenant expliquer le fonctionnement du dispositif selon le premier mode de réalisation de la présente invention.

Initialement le réservoir 6 est rempli de réactif liquide, en particulier d'une solution aqueuse contenant ou non un activateur de réaction solubilisé dans cette solution, et la chambre de réaction 8 est également remplie d'un réactif solide par exemple du NaBH4. Pour commencer la production d'hydrogène sous forme gazeuse, on actionne la molette 22 de manière à provoquer un déplacement du piston dans un sens de réduction du volume du réservoir 6 vers la droite sur la figure 1. Le réactif liquide contenu dans le réservoir 6, du fait d'une réduction du volume de celui-ci, tend à s'écouler dans le tube d'injection 16 entre le filetage et le taraudage jusqu'à l'extrémité 16.1 du tube d'injection 16. Lorsque le liquide sort du tube 16 par l'extrémité 16.2, il entre en contact avec le réactif solide 10, ce qui provoque la génération d'hydrogène sous forme gazeuse selon la réaction :

$$NaBH_4 + 2\ H_2O \rightarrow NaBO_2 + 4\ H_2 \qquad (I)$$

L'hydrogène sous forme gazeuse ainsi produit est ensuite évacué par le tube de collecte 26 en direction d'une pile à combustible en particulier une micro-pile à combustible afin de réagir avec l'hydrogène de l'air pour former de l'eau et des électrons suivant la réaction suivante :

$$H_2 + O_2\ (air) \rightarrow H_2O + e^-$$

Comme le tube d'injection 16 est solidaire en déplacement du piston 4, la rotation de la molette dans un sens de réduction du volume du réservoir 6, provoque un déplacement de l'extrémité 16.2 du tube, par conséquent la zone d'injection du réactif liquide est modifiée, plus précisément celle-ci est décalée axialement et suit le déplacement de l'extrémité 16.2 du tube 16. Dans l'exemple représenté sur la figure 1, cette extrémité 16.2 se déplace axialement vers la droite

Ainsi, le réactif liquide entre en contact avec le réactif solide 10 en des lieux de réaction différents. En d'autres termes, le réactif solide sur lequel est injecté le réactif liquide est toujours renouvelé.

Ce dispositif présente l'avantage d'être compact et de réalisation extrêmement simple. Il permet avec une commande manuelle de générer sur demande et avec une grande efficacité de production de l'hydrogène requis pour la production d'électricité du dispositif portable.

La cartouche étant prévue pour faire fonctionner une pile à combustible, une indication de paramètre électrique, tel que la tension ou l'intensité, peut alors avertir l'utilisateur de la nécessité de tourner a molette pour relancer la production de $H_2$.

Sur la figure 2 on peut voir une réalisation industrielle du dispositif selon le premier mode de réalisation de la présente invention représentée sur la figure 1, par exemple le boitier comporte un tube 30 muni d'un fond 32, par exemple réalisé en polycarbonate et un couvercle 34 obturant l'autre extrémité solidarisé au tube par des vis.

Comme on peut le voir sur la figure 2, les joints 12 sont montés dans des gorges pratiquées dans la périphérie extérieure du piston 4.

A titre d'exemple, le dispositif peut mesurer 8 cm de long et convenir 2,1 $cm^3$ de liquide et 4 $cm^3$ de réactif solide. Le diamètre du piston peut être de 12 mm avec une course de 24 mm, il est bien entendu que l'on peut prévoir des dispositifs de dimensions plus grandes ou plus petites, la chambre de réaction et le réservoir pouvant atteindre plusieurs dizaines de $cm^3$. La taille du dispositif de génération d'hydrogène sous forme gazeuse dépend bien entendu de la quantité d'hydrogène requise par la pile à combustible et plus généralement par le dispositif portable alimenté par la pile à combustible.

De manière avantageuse le piston et le tube sont réalisés d'une seule pièce, par exemple par moulage, il n'est donc pas nécessaire de prévoir un tube rapporté dans le piston 4.

Le piston ainsi que le tube peuvent être réalisés en matière plastique compatible avec les matériaux réactifs employés.

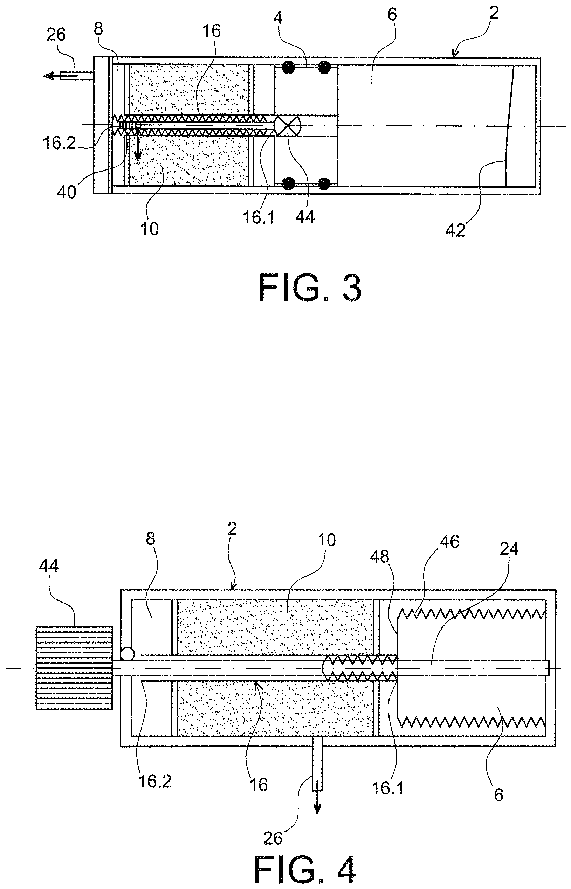

Sur la figure 3, on peut voir une variante de réalisation du premier mode de réalisation d'un dispositif générateur d'hydrogène sous forme gazeuse selon la présente invention, différant du dispositif des figures 1 et 2, en ce que la molette est remplacée par un moteur électrique 44 entraînant en rotation un arbre 24, et le piston 4 a été supprimé et une vessie souple 46 forme le réservoir 6. Dan cette variante, la réalisation de l'étanchéité du réservoir est alors simplifiée.

Dans le dispositif des figures 1 et 3, on peut également réaliser un réservoir sous la forme d'une vessie souple.

Le tube d'injection 16 met en communication l'intérieur de la vessie 46 et l'intérieur de la chambre de réaction 8, la vessie souple 46 peut être fixée de manière étanche par une première extrémité à une extrémité longitudinale du boitier 2 et par une deuxième extrémité à une rondelle rigide solidaire du tube 16 et à travers laquelle le liquide peut s'écouler.

L'arbre 24 comporte un filetage coopérant avec un taraudage pratiqué sur la paroi intérieure du tube 16 de manière analogue au dispositif des figures 1 et 3, une activation du moteur électrique 44 provoque une mise en rotation de l'arbre 24 et un déplacement axial relatif du tube 16 par rapport au tube 24, selon le sens de rotation du moteur, on provoque une augmentation ou une réduction du volume intérieur de la vessie souple 46.

Dans le fonctionnement de cette variante de réalisation, le moteur 44 tourne dans un sens de réduction du volume intérieur de la vessie souple 46 afin de provoquer par réduction de ce volume un écoulement du réactif liquide en direction de la chambre de réaction 8 entre le filetage et le taraudage.

De manière analogue au premier mode de réalisation, le réactif solide est prévu pour être poreux, et plus généralement pour permettre l'écoulement de l'hydrogène sous forme gazeuse en direction d'un tube de collecte 26 prévu sur la paroi latérale du boitier 4 dans l'exemple représenté.

Le moteur électrique peut être mis en route par l'utilisateur ou par un détecteur de pression sur la cartouche ou un détecteur d'intensité sur la pile. Par exemple, un contacteur électrique relié à un capteur de pression mesurant la pression d'hydrogène au niveau du tube de collecte 26, peut actionner le moteur dés que la pression est inférieure à une valeur de seuil prédéfinie.

Sur la figure 4, on peut voir un deuxième mode de réalisation d'un générateur d'hydrogène sous forme gazeuse selon la présente invention présentant l'avantage d'offrir un fonctionnement automatique. Selon ce deuxième mode de réalisation, l'injection du réactif liquide sur le réactif solide est gérée de manière automatique par le dispositif sans intervention manuelle de la part de l'utilisateur, l'injection du réactif solide étant géré de manière autonome par le dispositif de génération d'hydrogène.

Les mêmes références seront utilisées pour les dispositifs ayant sensiblement la même forme et remplissant sensiblement la même fonction.

Le dispositif selon le deuxième mode de réalisation représenté sur la figure 4 se distingue du dispositif selon le premier mode de réalisation en ce que des moyens de clapets anti-retour 38 sont prévus entre le réservoir 6 et la chambre de réaction 8 pour empêcher le gaz généré dans la chambre de réaction de s'écouler dans le réservoir.

Par ailleurs, un système de cliquet anti-retour 40 est prévu de manière à empêcher le tube 16 et le piston 4 de se déplacer dans un sens d'augmentation du volume du réservoir 6 ainsi, lorsque le réactif liquide s'écoule du réservoir 6 dans la chambre de réaction 8, et entre en contact avec le réactif solide, il a y génération d'hydrogène sous forme gazeuse, ce qui provoque une augmentation de la pression dans la chambre de réaction 8. Le clapet anti-retour 38 empêche l'écoulement du gaz hydrogène dans le réservoir ce qui permet une montée en pression dans cette chambre de réaction 8. Cette augmentation de pression exerce un effort sur le piston 4 qui coulisse selon l'axe 6 dans un sens de réduction du volume du réservoir 6, ce qui provoque un écoulement du réactif liquide vers la chambre de réaction 8.

Le tube de collecte 26 de l'hydrogène sous forme gazeuse est prévu dans ce mode de réalisation à une extrémité axiale de la chambre de réaction 8.

L'évacuation de l'hydrogène sous forme gazeuse de la chambre de réaction interrompt le coulissement du piston 4 dans un sens de réduction du volume du réservoir 6 et donc interrompt l'alimentation de la chambre de réaction 8 en réactif liquide.

Selon la présente invention, le tube d'injection 16 étant solidaire axialement du piston 4, l'extrémité d'injection 16.2 du tube se déplace axialement dans le réactif solide, la zone de réaction, en particulier la zone de contact entre le réactif liquide et le réactif solide est donc en permanence renouvelée.

L'engagement de la réaction, en particulier le début de l'injection du réactif liquide dans la chambre de réaction 8 est provoqué par une mise en pression du réservoir 6.

Dans l'exemple représenté sur la figure 4, on prévoit de délimiter au moins en partie le réservoir avec une membrane souple ou tout autre élément déformable afin de permettre au piston de se déplacer dans la chambre 6 et de permettre au cliquet d'attraper une nouvelle dent tant que la valeur de tarage du clapet anti-retour n'est pas atteinte.

Dans l'exemple représenté, la membrane 42 est prévue à une extrémité longitudinale du réservoir 6 opposée au piston 4.

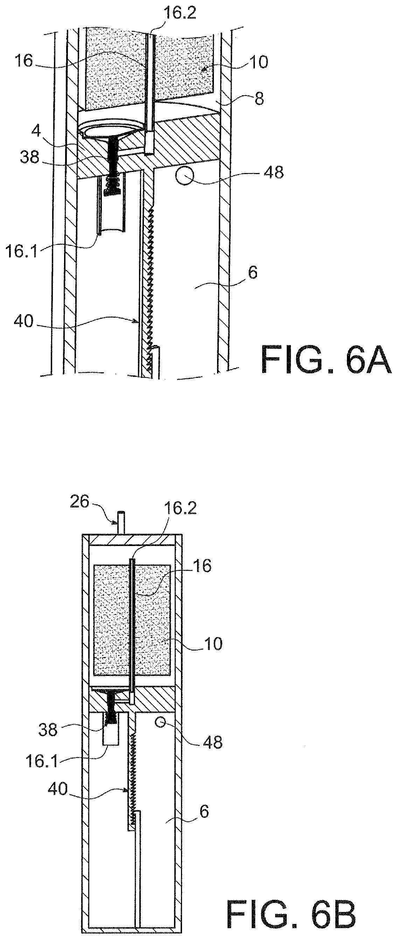

Sur les figures 6A et 6B, on peut voir un en détail le système de cliquet du deuxième mode de réalisation, dans lequel on remplace la membrane souple 42 par une bulle de gaz 48, celle-ci, lorsqu'elle est comprimée, permet au piston 4 de coulisser et donc au cliquet de passer à une nouvelle dent et ainsi de stocker la pression du liquide.

Dans le cas où on utilise une bulle de gaz 48, on prévoit des moyens pour enclencher la réaction.

De manière analogue au premier mode de réalisation, le réactif solide est prévu pour être poreux, et plus généralement pour permettre l'écoulement de l'hydrogène sous forme gazeuse en direction d'un tube de collecte 26.

Nous allons maintenant expliquer le fonctionnement du dispositif selon le deuxième mode de réalisation.

Lorsqu'une contrainte est appliquée sur la membrane 42 vers l'intérieur du réservoir 6, une mise en pression du réservoir 6 a lieu, lorsque que la différence de pression entre le réservoir et la chambre de réaction atteint la valeur de tarage du clapet, le réactif liquide s'écoule dans la chambre de réaction 8 par le tube 16.

Le liquide sort par l'extrémité 16.2 du tube d'injection 16 et entre en contact avec le réactif solide 10, générant de l'hydrogène sous forme gazeuse selon la réaction (I).

L'hydrogène ne pouvant s'échapper vers le réservoir du fait du clapet anti-retour, la pression augmente dans la chambre de réaction, la différence de pression entre le réservoir et la chambre de réaction est alors inférieure à la valeur de tarage du clapet, le clapet se ferme et l'écoulement du liquide du réservoir vers la chambre de réaction est interrompu.

Par ailleurs, un effort est appliqué sur le piston 4 qui se déplace dans un sens de réduction du volume du réservoir 6.

L'hydrogène est collecté par le conduit 26, la différence de pression entre le réservoir et la chambre de réaction atteint alors de nouveau la valeur de tarage du clapet anti-retour, du réactif liquide est à nouveau injecté dans la chambre de réaction 8. Ainsi en contrôlant la pression d'hydrogène dans la chambre de réaction 8, on peut maîtriser l'injection de réactif liquide sur le réactif solide.

Par exemple, un remplissage de la cavité isolée par la membrane 42 par un gaz à bas point d'ébullition, comme l'isobutane par exemple, permet de mettre cette membrane sous pression.

On peut bien sûr envisager que le réservoir soit formé par une poche qui se déforme entièrement.

A titre d'exemple, le déplacement du piston se fait par la pression apparaissant dans la chambre de réaction du fait de la génération de H2, la pression de liquide est stockée par le cliquet en comprimant une bulle de gaz de 72 $\mu$l.

On choisit une soupape est tarée à 5 bars.

Chaque dent du cliquet correspond à un volume déplacé de 60 $\mu$l. Pour un diamètre de piston de 1,6 cm, le pas du cliquet est donc de 0,3 mm.

Une bulle de gaz de 72 $\mu$l à la pression atmosphérique est donc comprimée au maximum à 5 bars par le déplacement d'une dent du cliquet.

Ainsi, en choisissant un volume maximum de liquide injecté de 60 $\mu$l, on génère 120 $cm^3$ de $H_2$, et en choisissant un volume mort de 24 $cm^3$ dans la chambre de réaction, on atteint une pression maximale dans la chambre de réaction de 5 bars.

Ce dispositif présente l'avantage d'assurer une injection automatique du réactif liquide sur le réactif solide sans nécessiter une intervention manuelle pendant toute la période de génération de l'hydrogène. Il suffit de provoquer la mise en pression du réactif liquide au début de l'étape de génération de l'hydrogène pour que l'injection de réactif liquide s'effectue de manière autonome.

Les différents modes de réalisation du dispositif générateur d'hydrogène décrits précédemment peuvent également être utilisés dans le but de générer d'autres types de gaz. Par exemple, il peut permettre de générer de l'acétylène par réaction de $CaC_2$ avec de l'eau ; pour produire du chlore par action de l'eau sur du chloral uréthane ($Cl_3CCH(OH)NHCOOC_2H_5$); pour produire du chlore par action d'une solution d'acide chlorhydrique sur un oxyde de manganèse ; ou enfin pour produire de l'oxygène par réaction de l'eau sur du peroxyde de sodium $Na_2O_2$.

Il est bien entendu que ces exemples ne sont en aucun cas limitatifs, et que le dispositif selon la présente invention peut permettre de produire d'autres gaz.

Dans les modes de réalisation décrits, le tube d'injection est fixé à la paroi mobile, ainsi la commande d'injection et le déplacement de la zone d'injection sont couplés de manière simple. Mais un dispositif dans lequel des moyens d'accouplement particuliers seraient prévus pour associer le déplacement de la paroi mobile au tube d'injection ne sort pas du cadre de la présente invention.

Dans les modes de réalisation décrits ci-dessus, un seul injecteur a été décrit, mais il est bien entendu que l'on pourrait prévoir de mettre en oeuvre plusieurs injecteurs, en particulier plusieurs tubes d'injection 16 montés en parallèle sur le piston 4, par exemple dans le premier et le deuxième modes de réalisation, pour augmenter les quantités de réactifs liquides injectés sur la surface du réactif solide et ainsi augmenter la quantité d'hydrogène gazeux produite à un instant donné. La mise en oeuvre de plusieurs injecteurs permet d'utiliser de manière optimale toute la section transversale du réactif solide.

Comme nous l'avons écrit précédemment, le réactif solide et/ou le réactif liquide peuvent contenir un catalyseur, ce catalyseur peut être du platine, du nickel, du Ru, du $CoCl_2$, de l'acide malique, ou de l'acide chlorhydrique.

Dans un troisième mode de réalisation, on prévoit d'utiliser, non plus un réactif solide disposé dans la chambre de réaction qui réagira avec un réactif liquide stocké dans le réservoir, mais un réactif liquide stocké dans le réservoir et un catalyseur disposé dans la chambre de réaction, le réactif liquide lors de son injection sur le catalyseur libérera un gaz.

Par exemple, la chambre de réaction contient un catalyseur déposé sur un substrat. Par exemple, le catalyseur est un métal type platine, ruthénium, cobalt, ou un alliage ou un alliage métallique du type CoB.

Lee substrat est par exemple une céramique poreuse, une mousse de carbone ou une mousse métallique, par exemple une mousse de nickel. Le substrat peut également être formé par une feuille métallique sur laquelle le catalyseur est déposé, par exemple par réduction chimique ou par dépôt plasma.

On pourrait utiliser un catalyseur seul, cependant le coût de fabrication serait plus élevé. L'utilisation d'un susbsrat permet de réduire la quantité de catalyseur et d'avoir une répartition améliorée du catalyseur dans la chambre de réaction.

Un substrat poreux permet de faciliter l'évacuation du gaz produit. Dans le cas d'un substrat non poreux au gaz, on prévoit des canaux pour le cheminement du gaz vers sa zone de consommation.

L'élément solide formé par le substrat et le catalyseur a une forme identique à celle du réactif solide de la figure 2.

Le réservoir stocke le liquide réactif avant son injection dans la chambre de réaction. Le liquide contient un réactif et un stabilisant. Le réactif est destiné à libérer un gaz lorsqu'il entre en contact avec le catalyseur. Le stabilisant a pour fonction d'éviter un dégagement de gaz par le réactif liquide avant sa mise en contact avec le catalyseur.

Dans le cas où le gaz à générer est l'hydrogène, le réactif est, par exemple du borohydrure de sodium ou du borohydrure de potassium dont la concentration est comprise entre 1% et 30% en masse; le stabilisant est par exemple de la soude ou de la potasse dont la concentration peut être comprise entre 0,1% et 20%. En effet, en milieu alcalin obtenu au moyen de la soude, la solution aqueuse d'hydrure est stable, il n'y a donc pas, grâce à la soude, dans le temps de réaction entre l'eau et l'hydrure en l'absence de catalyseur.

Le dispositif comporte une structure similaire à celle déjà décrite et son fonctionnement est identique.

Sur commande, le réactif liquide s'écoule à l'extrémité du tube d'injection mobile dans la chambre de réaction et entre en contact avec le catalyseur. Le point d'injection mobile permet de conserver un accès au catalyseur n'ayant pas encore servi à la réaction.

A tire d'exemple, le dispositif selon le troisième exemple de réalisation, peut être réalisé en déposant par réaction chimique un catalyseur formé de cobalt et de bore sur une mousse de carbone, cet ensemble solide est disposé dans la chambre de réaction. Une solution aqueuse contenant 15% en masse de $NaBH_4$ et 3%de soude est stockée dans le réservoir, celle-ci est prête à être injectée sur le catalyseur pour produire de l'hydrogène.

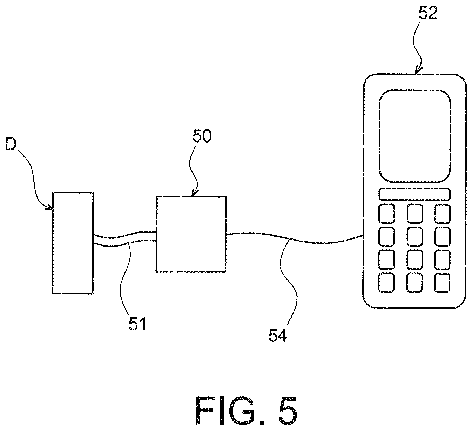

Sur la figure 5, on peut une représentation schématique d'une pile à hydrogène 50 alimentée en hydrogène par un dispositif D selon l'invention au moyen d'un conduit pneumatique 51, cette pile 50 alimentant en courant électrique un dispositif 52, préférentiellement portable, par un conducteur électrique 54.

La présente invention permet de réaliser des dispositifs portables à alimentation électrique d'encombrement réduit, dont la production d'électricité a un impacte limité sur l'environnement.

Cette pile à combustible ainsi alimentée peut servir à l'alimentation de téléphones portables, d'ordinateurs portables ou tout autre appareil portable requérant une alimentation électrique.

A titre d'exemple, le débit de gaz pourrait être compris entre 2 cm$^3$/min et 2000 cm$^3$/min. La durée de fonctionnement pourra varier de quelques minutes pour des piles à forte puissance (11 V - 14 A) à plusieurs mois selon la consommation en hydrogène, par exemple dans le cas d'un téléphone fonctionnant par intermittence à 500 mA.

On peut prévoir de recharger le réservoir en remplaçant les réactifs ou de changer la cartouche dans le cas d'un système jetable.

Ce dispositif peut être utilisé pour des véhicules électriques en augmentant les capacités et les diamètres des chambres de réaction. Il sera alors nécessaire dans ce cas de contrôler précisément la réaction de manière automatique.

## Revendications

1. Dispositif générateur de gaz par mise en contact d'un réactif liquide et d'un élément solide, comportant un réservoir (6) de réactif liquide et une chambre de réaction (8) destinée à contenir l'élément solide, le réservoir (6) et la chambre de réaction (8) étant séparés de manière étanche par une paroi mobile (4), une sortie de collecte (26) du gaz généré dans la chambre de réaction et des moyens d'injection (14) du réactif liquide sur l'élément solide, lesdits moyens d'injection (14) traversant la paroi mobile (4) et étant aptes à se déplacer dans l'élément solide, les moyens d'injection (14) étant solidaires en mouvement de la paroi mobile (4) et comportant au moins un tube (16) traversant la paroi mobile (4) et reliant le réservoir (6) et la chambre de réaction (8), ledit tube comportant une première extrémité axiale (16.1) débouchant dans le réservoir et une deuxième extrémité axiale (16.2) débouchant dans le chambre de réaction (8), ladite deuxième extrémité axiale (16.2) se déplaçant dans l'élément solide, et la paroi mobile (4) étant reliée à un mécanisme à vis sans fin.

2. Dispositif générateur de gaz selon la revendication 1, dans lequel la paroi mobile (4) est un piston, un déplacement du piston (4) dans un sens de réduction du volume du réservoir (6) provoquant un écoulement du réactif liquide du réservoir (6) vers la chambre de réaction (8).

3. Dispositif générateur de gaz selon la revendication 1 ou 2, dans lequel le réservoir (6) est délimité par une vessie souple (46) apte à se déformer pour provoquer l'écoulement du réactif liquide du réservoir (6) vers la chambre de réaction (8).

4. Dispositif générateur de gaz selon la revendication 1, 2 ou 3, dans lequel le mécanisme à vis sans fin comporte un arbre (24) muni d'un filetage coopérant avec un taraudage pratiqué dans une paroi intérieure du tube (16), l'arbre (24) étant apte être mis en rotation, et le réactif liquide pouvant s'écouler entre le tube (16) et l'arbre (24).

5. Dispositif générateur de gaz selon la revendication 4, comportant une molette (22) à une extrémité de l'arbre (24) apte à être tournée manuellement ou à l'aide d'un moteur électrique (44) en prise avec une extrémité de l'arbre (24).

6. Dispositif générateur de gaz selon l'une des revendications 1 à 5, dans lequel l'élément solide est apte à être traversé par un gaz, avantageusement l'élément solide est associé à un composant poreux et inerte vis-à-vis de la réaction.

7. Dispositif générateur de gaz selon l'une des revendications 1 à 6, dans lequel l'élément solide est un hydrure et le réactif liquide est une solution aqueuse.

8. Dispositif générateur de gaz selon l'une des revendications 1 à 7, dans lequel l'élément solide est du CaC$_2$ et le réactif liquide est une solution aqueuse, permettant de générer de l'acétylène, ou l'élément solide est du chloral uréthane et le réactif liquide est une solution aqueuse, permettant de générer du chlore, ou l'élément solide est de l'oxyde de manganèse et le réactif liquide est de l'acide chlorhydrique, permettant de générer du chlore, ou l'élément solide est du peroxyde de sodium et le réactif liquide est une solution aqueuse, permettant de générer de l'oxygène.

9. Dispositif générateur de gaz selon l'une des revendications 1 à 8, dans lequel le réactif liquide et/ou l'élément solide comporte(nt) un catalyseur de la réaction entre le réactif liquide et l'élément solide.

10. Dispositif générateur de gaz selon l'une des revendications 1 à 9, dans lequel le réactif liquide comporte un catalyseur formé par du platine, du nickel, du Ru, du CoCl$_2$, de l'acide malique, ou de l'acide chlorhydrique.

11. Dispositif générateur de gaz selon la revendication 1 à 6, dans lequel l'élément solide est un catalyseur de génération d'un gaz lorsque le réactif liquide est en contact avec celui-ci, le réactif liquide étant par exemple une solution aqueuse contenant un hydrure et un stabilisant, par exemple de la soude, et le catalyseur est du type platine, ruthénium, cobalt ou un alliage de cobalt et de bore.

**12.** Dispositif générateur de gaz selon la revendication 11, dans lequel l'élément solide comporte un substrat, avantageusement poreux, sur lequel est déposé le catalyseur.

**13.** Alimentation électrique comportant une pile à combustible et au moins un dispositif générateur d'hydrogène selon la revendication 7, 10 ou 11, ledit au moins dispositif générateur d'hydrogène étant relié pneumatiquement à la pile pour l'alimenter en hydrogène gazeux.

**14.** Elément portable électrique comportant une alimentation électrique selon la revendication 13.

**Patentansprüche**

**1.** Vorrichtung zum Erzeugen von Gas durch Bringen eines flüssigen Reagenzmittels und eines festen Elements in Kontakt, umfassend ein Reservoir (6) für flüssiges Reagenzmittel und eine Reaktionskammer (8), welche dazu vorgesehen ist, das feste Element zu enthalten, wobei das Reservoir (6) und die Reaktionskammer (8) in dichter Weise durch eine bewegbare Wand (4) getrennt sind, einen Sammelausgang (26) für in der Reaktionskammer erzeugtes Gas und Mittel zum Eingeben (14) des flüssigen Reagenzmittels auf das feste Element, wobei die Mittel zum Eingeben (14) die bewegbare Wand (4) durchqueren und dazu eingerichtet sind, sich in dem festen Element zu verlagern, wobei die Mittel zum Eingeben (14) sich zusammen mit der bewegbaren Wand (4) bewegen und wenigstens eine Leitung (16) umfassen, welche die bewegbare Wand (4) durchquert und das Reservoir (6) und die Reaktionskammer (8) verbindet, wobei die Leitung ein erstes axiales Ende (16.1) umfasst, welches in das Reservoir mündet, sowie ein zweites axiales Ende (16.2), welches in die Reaktionskammer (8) mündet, wobei das zweite axiale Ende (16.2) sich in dem festen Element verlagert und die bewegbare Wand (4) mit einem Schneckenmechanismus verbunden ist.

**2.** Vorrichtung zum Erzeugen von Gas nach Anspruch 1, wobei die bewegbare Wand (4) ein Kolben ist, wobei eine Verlagerung des Kolbens (4) in einer Richtung eines Verringerns des Volumens des Reservoirs (6) eine Strömung des flüssigen Reagenzmittels aus dem Reservoir (6) zu der Reaktionskammer (8) hervorruft.

**3.** Vorrichtung zum Erzeugen von Gas nach Anspruch 1 oder 2, wobei das Reservoir (6) durch eine flexible Blase (46) begrenzt ist, die dazu eingerichtet ist, sich zu deformieren, um die Strömung des flüssigen Reagenzmittels von dem Reservoir (6) zu der Reaktionskammer (8) hervorzurufen.

**4.** Vorrichtung zum Erzeugen von Gas nach Anspruch 1, 2 oder 3, wobei der Schneckenmechanismus eine Welle (24) umfasst, welche mit einem Gewinde versehen ist, welches mit einem Innengewinde zusammenwirkt, welches an einer Innenwand der Leitung (16) ausgeführt ist, wobei die Welle (24) dazu eingerichtet ist, in Rotation versetzt zu werden, und wobei das flüssige Reagenzmittel zwischen der Leitung (16) und der Welle (24) strömen kann.

**5.** Vorrichtung zum Erzeugen von Gas nach Anspruch 4, umfassend ein Stellrad (22) an einem Ende der Welle (24), welches dazu eingerichtet ist, manuell oder mit Hilfe eines Elektromotors (44) in Eingriff mit einem Ende der Welle (24) gedreht zu werden.

**6.** Vorrichtung zum Erzeugen von Gas nach einem der Ansprüche 1 bis 5, wobei das feste Element dazu eingerichtet ist, von einem Gas durchquert zu werden, wobei vorzugsweise das feste Element einer porösen Komponente zugeordnet und bezüglich der Reaktion inert ist.

**7.** Vorrichtung zum Erzeugen von Gas nach einem der Ansprüche 1 bis 6, wobei das feste Element ein Hydrid ist und das flüssige Reagenzmittel eine wässrige Lösung ist.

**8.** Vorrichtung zum Erzeugen von Gas nach einem der Ansprüche 1 bis 7, wobei das feste Element aus $CaC_2$ ist und das flüssige Reagenzmittel eine wässrige Lösung ist, wodurch erlaubt wird, Acetylen zu erzeugen, oder das feste Element Chloral-Urethan ist und das flüssige Reagenzmittel eine wässrige Lösung ist, wodurch erlaubt wird, Chlor zu erzeugen, oder das feste Element Manganoxid ist und das flüssige Reagenzmittel Salzsäure ist, wodurch erlaubt wird, Chlor zu erzeugen, oder das feste Element Natriumperoxid ist und das flüssige Reagenzmittel eine wässrige Lösung ist, wodurch erlaubt wird, Sauerstoff zu erzeugen.

9. Vorrichtung zum Erzeugen von Gas nach einem der Ansprüche 1 bis 8, wobei das flüssige Reagenzmittel und/oder das feste Element einen Katalysator für die Reaktion zwischen dem flüssigen Reagenzmittel und dem festen Element umfasst/umfassen.

10. Vorrichtung zum Erzeugen von Gas nach einem der Ansprüche 1 bis 9, wobei das flüssige Reagenzmittel einen Katalysator umfasst, welcher aus Platin, Nickel, Ru, $CoCl_2$, Apfelsäure oder Salzsäure gebildet ist.

11. Vorrichtung zum Erzeugen von Gas nach Anspruch 1 bis 6, wobei das feste Element ein Katalysator zum Erzeugen eines Gases ist, wenn das flüssige Reagenzmittel in Kontakt damit ist, wobei das flüssige Reagenzmittel beispielsweise eine wässrige Lösung ist, welche ein Hydrid und einen Stabilisator, beispielsweise Natron, umfasst, und der Katalysator vom Platin-, Ruthenium-, Kobalt-Typ oder eine Legierung aus Kobalt und Bor ist.

12. Vorrichtung zum Erzeugen von Gas nach Anspruch 11, wobei das feste Element ein Substrat, vorzugsweise porös, umfasst, auf welchem der Katalysator angelagert ist.

13. Stromversorgungsgerät, umfassend eine Brennstoffzelle und wenigstens eine Vorrichtung zum Erzeugen von Wasserstoff nach Anspruch 7, 10 oder 11, wobei die wenigstens eine Vorrichtung zum Erzeugen von Wasserstoff pneumatisch mit der Zelle verbunden ist, um sie mit gasförmigem Wasserstoff zu versorgen.

14. Tragbares elektrisches Element, umfassend ein Stromversorgungsgerät nach Anspruch 13.


**Claims**

1. Device for generating gas by placing a liquid reactant in contact with a solid element, comprising a liquid reactant tank (6) and a reaction chamber (8) intended to contain the solid element, wherein the tank (6) and the reaction chamber (8) are separated in a sealed manner by a mobile wall (4), with an outlet port (26) for collecting the gas generated in the reaction chamber and means (14) for injecting the liquid reactant onto the solid element, which injection means (14) pass through the mobile wall (4) and are capable of moving into the solid element, the injection means (14) being integrally with the mobile wall (4) and comprising at least one tube (16) passing through the mobile wall (4) and connecting the tank (6) and the reaction chamber (8), said tube (16) comprising a first axial end (16.1) opening in the tank and a second axial end (16.2) opening in the reaction chamber (8), said second axial end (16.2) moving in the solid element, and the mobile wall (4) being connected to an endless screw mechanism.

2. Gas generating device according to claim 1, wherein the mobile wall (4) is a piston, and a movement of the piston (4) in a direction of reducing the volume of the tank (6) causes the liquid reactant to flow from the tank (6) toward the reaction chamber (8).

3. Gas generating device according to claim 1 or 2, wherein the tank (6) is delimited by a flexible tank (46) capable of being deformed so as to cause the liquid reactant to flow from the tank (6) to the reaction chamber (8).

4. Gas generating device according to claim 1, 2 or 3, wherein the endless screw mechanism comprises a shaft (24) equipped with an external threading cooperating with an internal threading formed in an internal wall of the tube (16), in which the shaft (24) is capable of being rotated, and the liquid reactant can flow between the tube (16) and the shaft (24).

5. Gas generating device according to claim 4, comprising a thumb wheel (22) at one end of the shaft (24) capable of being turned manually or by means of an electric motor (44) engaged with an end of the shaft (24).

6. Gas generating device according to one of claims 1 to 5, wherein the solid element is capable of being passed through by a gas, the reactant being advantageously associated with a compound that is porous and inert with respect to the reactant.

7. Gas generating device according to one of claims 1 to 6, wherein the solid element is a hydride and the liquid reactant is an aqueous solution.

8. Gas generating device according to one of claims 1 to 7, wherein the solid element is $CaC_2$ and the liquid reactant is an aqueous solution, making it possible to generate acetylene, or the solid element is chloral urethane and the liquid reactant is an aqueous solution, making it possible to generate chlorine, or the solid element is manganese oxide and the liquid reactant is hydrochloric acid, making it possible to generate chlorine, or the solid element is sodium peroxide and the liquid reactant is an aqueous solution, making it possible to generate oxygen.

9. Gas generating device according to one of claims 1 to 8, wherein the liquid reactant and/or the solid element comprise(s) a catalyst of the reaction between the liquid reactant and the solid element.

10. Gas generating device according to one of claims 1 to 9, wherein the liquid reactant comprises a catalyst formed by platinum, nickel, Ru, $CoCl_2$, malic acid, or hydrochloric acid.

11. Gas generating device according to one of claims 1 to 6, wherein at the solid element is a catalyst for generating a gas when the liquid reactant is in contact with it, the liquid reactant being for example an aqueous solution containing a hydride and a stabilizer, for example sodium hydroxide, and the catalyst is platinum, ruthenium, cobalt or a cobalt and boron alloy.

12. Gas generating device according to one of claims 11, wherein the solid element comprises a substrate, advantageously porous, on which the catalyst is deposited.

13. Electrical power supply comprising a fuel cell and at least one hydrogen generating device according to claims 7, 10 or 11, in which said at least one hydrogen generating device is pneumatically connected to the fuel cell so as to supply it with gaseous hydrogen.

14. Portable electrical element comprising an electrical power supply according to claim 13.

FIG. 1

FIG. 2

FIG. 3

FIG. 4

FIG. 5

FIG. 6A

FIG. 6B

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2004018352 A
- US 20060191199 A